(19) Europäisches Patentamt
European Patent Office
Office européen des brevets

(11) **EP 3 565 408 B1**

(12) **FASCICULE DE BREVET EUROPEEN**

(45) Date de publication et mention de la délivrance du brevet:
**19.04.2023 Bulletin 2023/16**

(21) Numéro de dépôt: **18702748.7**

(22) Date de dépôt: **09.01.2018**

(51) Classification Internationale des Brevets (IPC):
**A01N 1/02** *(2006.01)*

(52) Classification Coopérative des Brevets (CPC):
**A01N 1/0263; A01N 1/0252**

(86) Numéro de dépôt international:
**PCT/FR2018/050047**

(87) Numéro de publication internationale:
**WO 2018/127675 (12.07.2018 Gazette 2018/28)**

(54) **DISPOSITIF ET PROCEDE DE CONSERVATION D'AU MOINS UN TISSU HUMAIN OU ANIMAL EN VUE D'UNE GREFFE OU D'UNE EXPERIENCE EX VIVO**

VORRICHTUNG UND VERFAHREN ZUM KONSERVIEREN VON MINDESTENS EINEM MENSCHLICHEN ODER TIERISCHEN GEWEBE IN HINBLICK AUF EINE TRANSPLANTATION ODER EIN EX-VIVO-EXPERIMENT

DEVICE AND PROCESS FOR PRESERVING AT LEAST ONE HUMAN OR ANIMAL TISSUE WITH A VIEW TO TRANSPLANTION OR EX-VIVO EXPERIMENTATION

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **09.01.2017 FR 1750180**

(43) Date de publication de la demande:
**13.11.2019 Bulletin 2019/46**

(73) Titulaires:
• **Université de Franche-Comté**
**25030 Besançon (FR)**
• **Tissueaegis**
**21000 Dijon (FR)**

(72) Inventeur: **GHARBI, Tijani**
**25030 Besancon (FR)**

(74) Mandataire: **Plasseraud IP**
**66, rue de la Chaussée d'Antin**
**75440 Paris Cedex 09 (FR)**

(56) Documents cités:
**EP-A1- 2 896 685      WO-A1-2014/188365**
**WO-A1-2015/021513      US-A1- 2011 014 690**

• **Anonymous: "Edition de Besançon | Besançon : une innovation en faveur de la greffe de cornée", , 14 juin 2015 (2015-06-14), XP055409130, Extrait de l'Internet: URL:http://www.estrepublicain.fr/edition-d e-besancon/2015/06/14/besancon-une-innovat ion-en-faveur-de-la-greffe-de-cornee [extrait le 2017-09-22]**

**Description**

La présente invention concerne un dispositif et un procédé de conservation et de transport d'au moins un tissu humain ou animal, en vue d'une greffe ou d'une expérience *ex vivo.* L'invention s'applique à la conservation d'un tel tissu dans un milieu de conservation spécifique jusqu'à la greffe ou l'expérience *ex vivo,* et en particulier à la conservation d'un prélèvement de cornée humaine ou animale, tel qu'un greffon de cornée, à titre non limitatif.

Actuellement, la conservation d'un greffon de cornée se fait principalement de deux façons :

- conservation à froid (procédé le plus utilisé en Amérique du Nord, typiquement à +4° C) : les greffons cornéens sont conservés pendant une courte durée (10 jours maximum) dans un milieu de culture spécifique, et
- conservation à chaud en organoculture (procédé utilisé par la majorité des banques de cornées européennes, typiquement entre 31° C et 37° C) : le greffon cornéen est conservé pendant une longue durée (5 semaines environ) en étant d'abord immergé dans un milieu de prélèvement dès son prélèvement et jusqu'à sa réception par la banque de cornées, où il est immédiatement transféré dans un milieu de conservation de même nature que le milieu de prélèvement mais dans lequel le greffon est conservé au maximum 30 jours. Deux jours avant la greffe, on place le greffon dans un milieu dit de « déturgescence » pour réduire l'œdème dû à sa conservation et faciliter ainsi le geste chirurgical ultérieur.

Quelle que soit la méthode de conservation, le greffon est usuellement immergé dans son liquide nutritif à l'intérieur d'un flacon en verre ou en plastique, suite au prélèvement *post mortem.* Comme le nombre de cellules endothéliales vivantes par $mm^2$ conditionne son utilisation lors d'une greffe, on contrôle la qualité endothéliale de la cornée par deux comptages de ces cellules respectivement réalisés à la réception de la cornée et lors de son immersion en milieu de déturgescence. Ces comptages nécessitent différentes étapes de manipulation des cornées telles que des transferts dans des boîtes de pétri, une coloration par du bleu de trypan, des rinçages puis, après le comptage des cellules vivantes au moyen d'un microscope, une remise en flacon de la cornée. Or, ces manipulations risquent d'engendrer une contamination externe de la cornée et un traumatisme de l'endothélium.

Pour la conservation simultanée d'une multitude de cornées, il est connu de les conditionner séparément dans de tels flacons contenant leurs milieux de conservation que l'on place dans un incubateur maintenu à la température de conservation. Pour procéder à un contrôle qualité des cornées ainsi conservées, l'opérateur est contraint de sortir les flacons un à un de l'incubateur pour réaliser séparément sur chaque cornée une observation microscopique, un comptage des cellules vivantes et une vérification de la couleur du milieu, notamment. Il en résulte une perte considérable de temps et un coût élevé pour l'ensemble du contrôle qualité, avec en outre un risque non négligeable de détérioration des cornées dû à leur manipulation.

Le document WO 2014/140434 A1 présente un dispositif de conservation d'un prélèvement cornéen comprenant essentiellement des moyens de réception et d'emprisonnement sous pression réglable du prélèvement cornéen avec injection et prélèvement d'un liquide de conservation pour analyses, des moyens d'applanation du dôme cornéen, et des moyens d'injection de substances dans le dispositif, avec un contrôle visuel ou instrumental de la qualité du prélèvement cornéen sans ouverture du dispositif. Le but recherché dans ce document est de permettre le contact entre le liquide de conservation renouvelé et les deux faces de la cornée, en délimitant dans le dispositif deux chambres respectivement endothéliale et épithéliale, indépendamment des paramètres physicochimiques du liquide dont aucun n'est régulé en continu, ce qui présente l'inconvénient d'une altération potentiellement critique du liquide de conservation à laquelle il est difficile de remédier une fois cette altération détectée lors du contrôle qualité.

En effet, on effectue généralement le transport d'un flacon contenant un greffon de cornée à température ambiante sans aucun suivi des conditions de conservation du greffon, ce qui augmente le risque de détérioration de sa qualité biologique puisque les conditions optimales de sa conservation comprenant notamment la température et le pH du milieu de conservation ne sont pas respectées.

Ainsi, un inconvénient majeur des dispositifs et procédés de l'art antérieur pour conserver des tissus tels que des cornées réside non seulement dans les ouvertures et manipulations successives des flacons les contenant pour les contrôles qualité des tissus et dans leurs transferts requis dans d'autres milieux (cas du procédé de conservation à chaud précité), mais encore dans le respect en continu des conditions de conservation du milieu.

WO 2014/188365 A1 divulgue un dispositif portable pour maintenir la viabilité d'une matière biologique, dans lequel le dispositif comprend un compartiment interne pour recevoir un milieu de culture et la matière biologique. Une chambre de réaction est hermétiquement scellée au compartiment interne, la chambre de réaction comprenant un mélange acide-base et un solvant pour générer du dioxyde de carbone par une réaction chimique. Le dioxyde de carbone généré est fourni au compartiment interne via un filtre pour maintenir la valeur de pH du milieu de culture pendant le transport du dispositif.

Un but de la présente invention est de proposer un dispositif de conservation d'au moins un tissu humain ou animal, par exemple un prélèvement cornéen, en vue d'une greffe ou d'une expérience *ex vivo,* le dispositif comprenant au moins une chambre qui est adaptée pour recevoir et conserver ledit au moins un tissu dans un milieu de conservation liquide et qui comprend des moyens de renouvellement en continu dudit milieu dans ladite au moins une chambre, qui remédie aux inconvénients précités.

A cet effet, selon l'invention un dispositif tel que défini dans la revendication 1 est fourni. Le dispositif comprend en outre des moyens de régulation d'au moins un paramètre physicochimique dudit milieu comprenant son pH, par circulation en continu d'un gaz tampon dans ladite au moins une chambre hors et au contact dudit milieu.

Par « gaz tampon », on entend de manière usuelle dans la présente description un gaz qui est apte à tamponner le milieu de conservation en le transformant en une solution tampon, i.e. en une solution qui présente un pH sensiblement constant.

On notera que cette régulation en continu du pH du milieu de conservation qui caractérise un dispositif selon l'invention permet notamment de conserver le ou chaque tissu (e.g. un greffon cornéen) dans son milieu nutritif suivant des conditions optimales, pendant une durée pouvant atteindre 5 semaines dans le cas de ce greffon cornéen (i.e. jusqu'à sa greffe).

On notera également que la mesure en continu du pH inhérente à cette régulation permet de détecter à tout instant une contamination bactérienne du milieu dans lequel est immergé le ou chaque tissu.

Lesdits moyens de régulation comprennent des orifices d'amenée et d'évacuation dudit gaz tampon dans et de ladite au moins une chambre, de sorte que ledit gaz tampon soit amené dans et évacué de ladite au moins une chambre au-dessus dudit milieu. Lesdits moyens de régulation comprennent en outre des raccords fluidiques pour ledit gaz tampon (par exemple de type «Luer») communiquant respectivement avec lesdits orifices d'amenée et d'évacuation et aptes à le faire circuler sous pression et en continu dans ladite au moins une chambre, via une unité de mise en circulation que comprend le dispositif et qui comprend par exemple des pompes.

Selon une autre caractéristique de l'invention, ladite au moins une chambre peut comporter :

- un récipient comportant un fond prolongé par une paroi latérale périphérique s'étendant à partir dudit fond, ledit récipient présentant de préférence une face interne sensiblement hémisphérique, et
- un couvercle au moins en partie transparent monté sur ladite paroi latérale, ledit couvercle étant de préférence conçu pour une ouverture unique et pourvu de moyens signalant à un opérateur son ouverture antérieure,

et dans lequel lesdits orifices d'amenée et d'évacuation dudit gaz tampon tel que du dioxyde de carbone sont formés dans une zone supérieure de ladite paroi latérale adjacente audit couvercle.

On notera que ce récipient à face interne sensiblement hémisphérique permet de minimiser les défauts d'homogénéité des propriétés du milieu et les altérations potentielles du ou de chaque tissu par des arêtes ou angles vifs.

On notera également que la transparence du couvercle autorise des mesures optiques pour le comptage des cellules vivantes du ou de chaque tissu, via la transparence du milieu.

On notera en outre que la ou chaque chambre d'un dispositif selon l'invention peut ainsi avantageusement n'être ouverte qu'une seule fois, et que lesdits moyens signalant son ouverture à un opérateur (e.g. un chirurgien, son assistant ou toute autre personne devant accéder au tissu en vue de la prochaine greffe ou expérience *ex vivo*) comprennent par exemple une patte sécable initialement solidaire à la fois du couvercle et de la paroi latérale du récipient.

Selon une autre caractéristique de l'invention, lesdits moyens de régulation peuvent comprendre en outre :

- au moins un capteur dudit au moins un paramètre physicochimique communiquant avec l'intérieur de ladite au moins une chambre et comprenant un capteur de pH,
- optionnellement un capteur microbiologique par exemple fonctionnalisé apte à détecter une bactérie donnée dans ledit milieu, et
- optionnellement au moins une ouverture dans ladite paroi latérale pour introduire dans ladite au moins une chambre un fluide thérapeutique (i.e. une sorte de médicament à effet prophylactique ou curatif) ou non pour préserver ledit au moins un tissu et/ou pour accélérer sa régénération tissulaire.

On notera que l'unité de mise en circulation que comprend le dispositif peut avantageusement comprendre des micro-pompes piézoélectriques, dont la pression peut par exemple varier de 0 à 600 mbar (i.e. 60 000 Pa) pour des débits par exemple de 0 à 7 mL/min.

Selon une autre caractéristique de l'invention, lesdits moyens de renouvellement dudit milieu peuvent comprendre des orifices d'introduction et de prélèvement dudit milieu adaptés pour l'introduire dans et le prélever de ladite au moins une chambre, respectivement en provenance d'un premier réservoir du dispositif contenant ledit milieu non usé à introduire et vers un second réservoir du dispositif contenant ledit milieu usé une fois prélevé, lesdits orifices d'introduction et de prélèvement étant formés dans ledit récipient et communiquant respectivement avec deux raccords fluidiques pour ledit milieu (par exemple également de type « Luer ») aptes à faire circuler sous pression et en continu ledit milieu dans ladite au moins une chambre via ladite unité de mise en circulation.

On notera qu'un dispositif selon l'invention permet ainsi un renouvellement automatique et en continu du milieu de conservation grâce à ces deux raccords fluidiques étanches, à l'instar de la circulation en continu dudit gaz tampon dans la chambre permettant de tamponner ce mlilieu renouvelé via les deux raccords fluidiques pour ce gaz.

Selon une autre caractéristique préférentielle de l'invention, le dispositif peut comprendre en outre une unité de régulation de la température dudit milieu dans ladite au moins une chambre à au moins une valeur prédéterminée comprise entre -20° C et 50° C, ladite unité de régulation étant montée hors de ladite au moins une chambre contre ledit fond et comprenant de préférence un module Peltier pourvu de connecteurs et d'un capteur de température communiquant avec l'intérieur de ladite au moins une chambre.

Cette mesure de la température est avantageusement réalisée par un thermocouple ou autre capteur de température.

S'agissant de l'exemple d'un prélèvement cornéen, on notera également que sa conservation à long terme (jusqu'à 5 semaines) peut avantageusement être réalisée dans une gamme de température allant de 0 à 37° C dans la ou chaque chambre.

Selon un autre aspect de l'invention, le dispositif peut comporter en outre un boîtier unitaire transportable comprenant :

- un premier logement recevant de manière amovible une coque thermiquement isolante de préférence polymérique (e.g. en polytétrafluoroéthylène) dans laquelle est logée une dite chambre unitaire dont ledit récipient est de préférence métallique (e.g. en titane),
- ladite unité de mise en circulation dudit au moins un milieu de conservation et dudit gaz tampon dans ladite chambre comprenant de préférence des pompes (lesquelles peuvent être stérilisées en autoclave pour une réutilisation dans des conditions d'asepsie),
- un accumulateur d'énergie électrique pour le fonctionnement du dispositif comprenant de préférence une batterie (permettant par exemple une autonomie de 72 heures),
- un second logement recevant de manière amovible un premier réservoir contenant ledit milieu non usé à introduire dans ladite chambre,
- un troisième logement recevant de manière amovible un second réservoir contenant ledit milieu usé une fois prélevé de ladite chambre,
- un microcontrôleur à carte mémoire qui est apte à permettre la traçabilité de conditions de conservation dudit au moins un tissu en particulier pendant le transport du dispositif, comprenant des valeurs mesurées et à réguler dudit au moins un paramètre physicochimique, de la température dudit milieu et optionnellement de paramètres microbiologiques, ladite carte contenant des données relatives audit milieu et optionnellement audit au moins un tissu et/ou à son donneur,
- des moyens d'affichage desdites conditions de conservation, comprenant de préférence un écran tactile, et
- des moyens de communication avec un opérateur comprenant par exemple une antenne de type GSM ou Wifi, Bluetooth ou Zigbee, lesdits moyens de communication étant couplés audit microcontrôleur et aptes à permettre audit opérateur d'accéder auxdites conditions de conservation et de les modifier par exemple en modifiant le débit et/ou la pression dudit gaz tampon pour régler le pH dudit milieu.

On notera qu'un opérateur (i.e. le chirurgien ou toute autre personne) ferme dans un premier temps le récipient contenant le tissu prélevé baignant dans son milieu de conservation au moyen du couvercle, puis scelle la chambre de conservation unitaire obtenue avec un bouchon avant de l'insérer dans ladite coque pour réduire les déperditions thermiques. Puis on insère l'ensemble chambre-coque en le branchant au boîtier de transport grâce à des connecteurs de type « jacks », la chambre étant alimentée continûment en milieu de conservation et en gaz tampon lors de son transport dans ce boîtier.

On notera également que ledit second réservoir contenant le milieu usé permet de réaliser des analyses microbiologiques et biochimiques nécessaires au contrôle qualité de la stérilité du tissu, même pendant son transport.

On notera en outre que ladite carte mémoire peut avantageusement contenir l'ensemble des paramètres physicochimiques relatifs au milieu de conservation contenu dans la chambre transportée, et que le système électronique incluant ce microcontrôleur et ces moyens de communication permet de consulter et de modifier à distance tout ou partie de ces paramètres en agissant en temps réel par exemple sur le gaz tampon mis en circulation dans la chambre.

Ainsi, le boîtier unitaire transportable que peut comprendre un dispositif selon l'invention pour son transport présente les avantages suivants :

- le tissu à greffer (e.g. un greffon cornéen) peut être transporté dans les meilleures conditions pour sa conservation entre le lieu de son prélèvement et la banque de tissus correspondants (e.g. de cornées) et entre cette banque et le lieu de la greffe, via le transport (pendant au maximum 72 heures environ dans le cas d'une cornée) de la chambre de conservation unitaire contenant ce tissu immergé dans son milieu de conservation avec un maintien en température du milieu et donc du tissu durant ce transport à une température pouvant varier de -20° C à 50° C ;

- ce boîtier affiche les paramètres pertinents, dont la température, le pH et la couleur du milieu de conservation par exemple sur l'écran tactile, lequel permet également de modifier les consignes relatives aux conditions de transport (e.g. température de la chambre, débit et/ou pression du milieu de conservation y circulant, débit et/ou pression du gaz tampon y circulant) ; et
- ce boîtier enregistre les données récoltées au cours du transport de la chambre sur une mémoire suffisante de la carte du microcontrôleur pour stocker tous les paramètres précités relatifs à la chambre et pour les transmettre grâce auxdits moyens de communication à un opérateur.

Selon encore un autre aspect de l'invention, le dispositif peut être adapté pour la conservation et un contrôle qualité simultanés de plusieurs dits tissus et il comprend :

- un plateau configuré pour recevoir suivant un agencement circulaire ou linéaire une pluralité de dites chambres respectivement adaptées pour contenir lesdits tissus baignant dans des dits milieux de conservation identiques ou différents dont les températures et des dits paramètres physicochimiques sont régulés individuellement,
- un réceptacle pour au moins un dit premier réservoir et un dit second réservoir couplés à chacune desdites chambres, et
- des moyens d'analyse qui comprennent par exemple un microscope pour le comptage de cellules vivantes dans lesdits tissus et qui sont montés en mouvement relatif par rapport audit plateau (ces moyens d'analyse pouvant comprendre tout autre appareil de métrologie).

Dès réception par la banque des tissus correspondants (e.g. la banque de cornées), chaque chambre de conservation unitaire contenant le tissu, tel qu'un greffon cornéen, est alimentée (i.e. branchée via la connectique équipant sa paroi de fond, pour faire communiquer la chambre avec les circuits de milieu de conservation et de gaz tampon et l'unité de régulation de température nécessaires à la croissance des cellules) en un emplacement prévu à cet effet du plateau du dispositif, lequel forme ainsi un incubateur multi-tissus.

Avantageusement, ledit plateau peut présenter une surface de réception des chambres qui est en forme de couronne circulaire présentant un axe de symétrie et qui présente une succession de logements pour les chambres, ces logements étant répartis suivant ledit agencement circulaire et étant adaptés pour réaliser le branchement desdits raccords fluidiques pour ledit gaz tampon et pour ledit milieu, dudit capteur de pH et du capteur de température, et lesdits moyens d'analyse tels que ledit microscope peuvent alors être montés en rotation sur un support mobile centré sur ledit axe de symétrie, monté en contrebas du plateau et par exemple pourvu de crans pour positionner les moyens d'analyse suivant des positions angulaires déterminées par rapport auxdites chambres, lesquelles sont par exemple disposées suivant une dite succession de paires radiales de dits logements.

Ce dispositif particulier selon l'invention permet notamment de résoudre le problème de la conservation simultanée de plusieurs greffons cornéens et de leur contrôle qualité en assurant les fonctions suivantes :

- conservation et contrôle qualité de plusieurs tissus en même temps grâce audit plateau qui peut contenir n chambres de conservation unitaires (n variant par exemple de 10 à 30) avec un maintien en température de ces chambres (de préférence entre -20° C et 50° C), un renouvellement automatique et en continu du milieu de conservation dans ces chambres de façon individuelle (chaque chambre étant pourvue d'un circuit séparé pour la circulation du milieu de conservation, ce qui permet d'éviter tout risque de contamination des autres chambres) et une circulation en continu dudit gaz tampon dans les chambres également de façon individuelle,
- possibilité de stérilisation en autoclave desdits réservoirs contenant les milieux de conservation ainsi que des organes de l'unité de mise en circulation (comprenant de préférence lesdites pompes) pour une réutilisation en toute sécurité et sans risque de contamination du reste du dispositif,
- enregistrement en temps réel des paramètres de contrôle qualité des tissu conservés (e.g. température, pH, etc.) qui sont consultables sur un ordinateur, et
- possibilité d'une future thérapie grâce à la présence d'un dit premier réservoir pour chaque chambre, en injectant une substance appropriée dans ce premier réservoir.

Un procédé de conservation selon l'invention est défini dans la revendication 9.

Avantageusement, on peut faire circuler ledit gaz tampon selon un débit et une pression partielle réglables, avec de préférence pour la conservation d'une dite cornée une fraction molaire de dioxyde de carbone à titre de gaz tampon comprise entre 2 % et 10 % et par exemple entre 4 % et 6 %.

D'autres caractéristiques, avantages et détails de la présente invention ressortiront à la lecture de la description suivante d'exemples de réalisation de l'invention, donnés à titre illustratif et non limitatif, la description étant réalisée en référence aux dessins joints, parmi lesquels :

la figure 1 est une vue latérale et en perspective d'une chambre de conservation unitaire incluse dans un dispositif selon l'invention,

la figure 2 est une vue de dessus et en perspective de la chambre de la figure 1,

la figure 3 est une vue de dessous et en perspective de la chambre de la figure 1 montrant la connectique dont elle est pourvue,

la figure 4 est une vue latérale et en perspective d'une coque selon l'invention adaptée pour recevoir une chambre selon les figures 1 à 3,

la figure 5 est une vue de dessus et en perspective d'un dispositif selon l'invention formant boîtier transportable incorporant une chambre selon les figures 1 à 3 logée dans une coque selon la figure 4,

la figure 6 est une vue frontale avant et en perspective du dispositif de la figure 5,

la figure 7 est une vue latérale et en perspective du dispositif de la figure 6,

la figure 8 est une vue similaire à la figure 7 mais avec arrachement des parois externes du boîtier pour visualiser une partie de ses composants internes,

la figure 9 est une vue de dessus et en perspective montrant un exemple de microcontrôleur tel que visible dans le boîtier de la figure 8, et

la figure 10 est une vue de dessus et en perspective d'un dispositif selon un autre aspect de l'invention formant un incubateur multi-tissus adapté pour recevoir une multitude de chambres selon les figures 1 à 3.

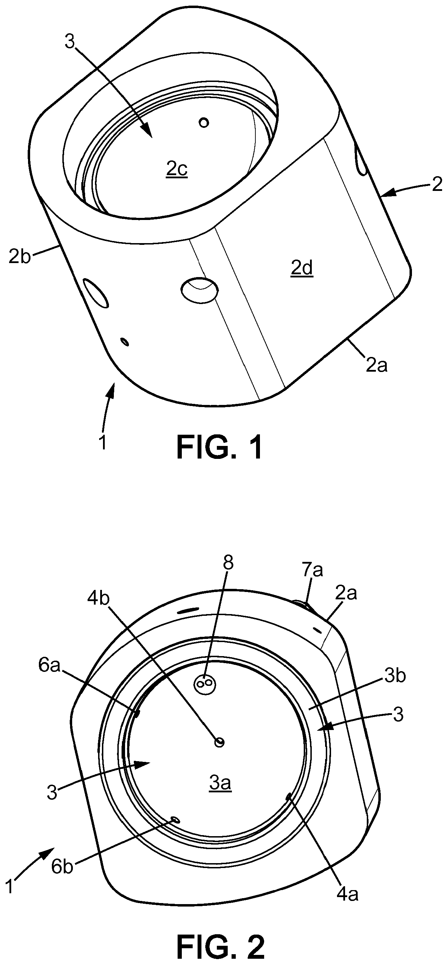

La chambre de conservation unitaire 1 visible aux figures 1-3 qui constitue un élément principal d'un dispositif de conservation 1', 1" selon l'invention, est destinée à recevoir un tissu, tel qu'une cornée, immergé dans un bain d'un milieu de conservation liquide spécifique à ce tissu, et comprend :

- un récipient 2 métallique (par exemple en titane) comportant un fond 2a prolongé par une paroi latérale périphérique 2b s'étendant à partir du fond 2a, le récipient 2 présentant une face interne sensiblement hémisphérique 2c et la paroi latérale 2b présentant une face externe 2d globalement convexe (définie dans cet exemple par deux côtés convexes opposés en arcs de cylindre reliés entre eux par deux côtés plats via des zones de liaison arrondies), et
- un couvercle 3 au moins en partie translucide ou transparent (comprenant par exemple une fenêtre 3a de type vitre en verre ou en un autre matériau tel que du saphir) qui est verrouillé en vue d'une ouverture unique sur une partie supérieure de la face interne 2c de la paroi latérale 2b adaptée pour ce verrouillage, via des moyens de retenue 3b aptes à signaler à un opérateur son ouverture antérieure (par exemple via la rupture d'une patte sécable, non représentée).

Dans le récipient 2 sont formés (voir figure 2) :

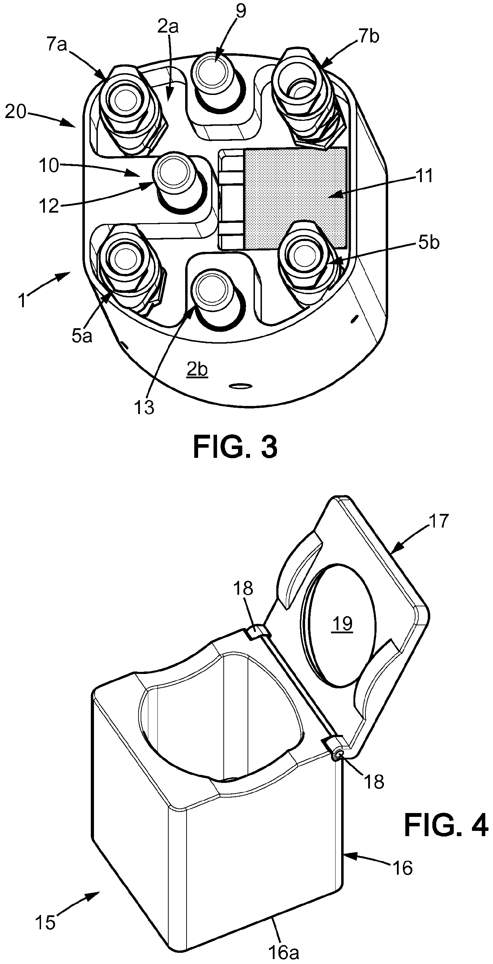

- dans la paroi latérale 2b et dans le fond 2a, respectivement un orifice d'introduction 4a et un orifice de prélèvement 4b (i.e. de sortie) du milieu de conservation qui communiquent avec des raccords fluidiques 5a et 5b par exemple de type « Luer » montés de manière étanche contre la face externe du fond 2a et traversant ce dernier (voir figure 3),
- dans une zone supérieure de la paroi latérale 2b située immédiatement en dessous des moyens de retenue 3b du couvercle 3, des orifices d'amenée 6a et 6b et d'évacuation d'un gaz tampon tel que du $CO_2$ dans et de la chambre 1 qui communiquent également avec des raccords fluidiques 7a et 7b par exemple de type « Luer » montés de manière étanche contre la face externe du fond 2a et traversant ce dernier (voir figure 3),
- dans le fond 2a ou dans une zone inférieure de la paroi latérale 2b, un capteur 8 de pH du milieu de conservation (de préférence un micro-capteur potentiométrique) qui communique avec un connecteur 9 monté contre et à travers le fond 2a, et
- une unité de régulation de la température 10 du milieu dans la chambre 1 à une valeur prédéterminée entre -20° C et 50° C, qui est montée contre la face externe du fond 2a et qui comprend un module Peltier 11 (voir figure 3) pourvu d'un premier connecteur 12 pour ce module 11 et d'un second connecteur 13 pour un capteur de température communiquant avec l'intérieur de la chambre 1.

Le module Peltier 11 utilise de manière connue l'effet thermoélectrique, phénomène physique de déplacement de chaleur en présence d'un courant électrique. Dans les dispositifs 1', 1" de l'invention illustrés aux figures 4-8 et 10, ce module 11 utilise un composant électronique qui permet d'obtenir une température maximale en lui appliquant une tension positive, et une température minimale par l'inversion de cette tension à ses bornes. A titre d'exemple mis en oeuvre pour la conservation d'une cornée, on a testé un module Peltier 11 fabriqué par Adaptative sous la référence ET-071-10-13-RS, de type 21,2 W - 3,9A - 8,8 V - 20 x 20 mm. Ce module 11 était équipé d'une boucle d'asservissement constituée d'un thermocouple et d'un microcontrôleur, pour assurer la régulation de la température du milieu de conservation à une température de consigne comprise entre -20° C et 50° C dans le cadre de l'invention.

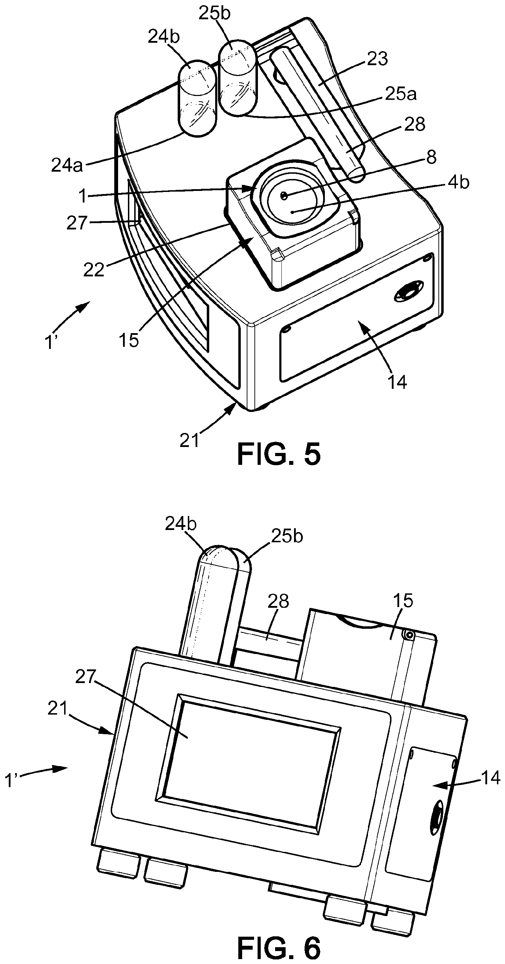

Les dispositifs 1' et 1" comprennent chacun en outre une unité de mise en circulation 14 (voir figures 5-7) du milieu de conservation et du gaz tampon via les raccords fluidiques 5a, 5b et 7a, 7b et orifices 4a, 4b et 6a, 6b, qui comprend de préférence des pompes. On a en particulier testé des pompes piézo-électriques (pompes Mp6 Micropump de la société Bartels Mikrotechnik, à deux actionneurs piézoélectriques dans un même logement) pour le renouvellement du milieu de conservation, avec une pression appliquée au liquide ou au gaz qui varie de 0 à 600 mbar (0 à 60 000 Pa) pour des débits de 0 à 7 mL/min. (étant précisé que la pression peut atteindre plusieurs bars lorsque les pompes sont mécaniques).

Concernant le gaz tampon mis en circulation dans la chambre 1, on a en particulier testé du $CO_2$ pour la conservation d'une cornée, en utilisant une fraction molaire de $CO_2$ de 5 % dans l'atmosphère humide thermostatée de la chambre 1, soit avec la pression partielle de $CO_2$ suivante à la pression atmosphérique de 790 mm Hg (soit $1,013.10^5$ Pa) :

$$P_{CO2} = 0,05 \,.\, 760 \text{ (mmHg)} = 38 \text{ mmHg (soit environ 5 065 Pa).}$$

Comme expliqué ci-dessus, la circulation continue de ce gaz tampon dans la chambre 1 au-dessus et au contact du milieu de conservation contenu dans celle-ci (i.e. en évitant une circulation du gaz directement au sein du liquide de conservation) permet de réguler en continu le pH du milieu, pour conserver le tissu dans son milieu nutritif selon des conditions optimales jusqu'à la greffe (pendant une durée pouvant par exemple atteindre 5 semaines dans le cas d'une cornée). De plus, la mesure en continu du pH du milieu de conservation dans lequel est immergé le tissu permet de détecter à tout instant une contamination bactérienne de ce milieu.

Les essais réalisés par la Demanderesse ont ainsi établi qu'une fraction molaire de $CO_2$ égale à 5 % permet de maintenir un pH optimal sensiblement constant, pour un milieu de conservation de dénomination CorneaMax® de la société EUROBIO contenant un greffon de cornée et dont la température était régulée à 31° C par le module Peltier 11 précité ET-071-10-13-RS (cette régulation à 31° C est particulièrement adaptée à la pratique des banques de cornées européennes, étant précisé qu'il est possible de réguler la température du milieu à une température beaucoup plus basse de seulement 4° C par exemple, suivant en cela la pratique en Amérique du Nord).

La figure 4 montre la structure d'une coque 15 thermiquement isolante (e.g. en Téflon®) comprenant un container 16 sensiblement cubique pourvu d'un couvercle de coque 17 (illustré vide et en position ouverte) qui est articulé par des charnières 18 et qui présente une fenêtre 19 translucide ou transparente, à l'instar du couvercle 3 de la chambre 1 que la coque 15 est adaptée pour recevoir après fermeture et scellage du couvercle 3 de la chambre 1. La paroi de fond 16a du container 16 est traversée par la connectique 20 de la chambre 1 (comme visible à la figure 3, cette connectique 20 comprend notamment les raccords 5a, 5b, 7a, 7b et les connecteurs 9, 12-13, en plus d'une batterie et d'une carte-mémoire, non visibles), de sorte à permettre l'alimentation de la connectique 20 pour la mise en oeuvre de la conservation du tissu et l'enregistrement des conditions de conservation lors du transport de la chambre 1 au moyen de la coque 15.

Selon un autre aspect de l'invention, la coque 15 contenant la chambre remplie du tissu baignant dans son milieu de conservation est elle-même connectée à un boîtier unitaire transportable 21 que peut comprendre un dispositif 1' selon l'invention.

Comme illustré aux figures 5 à 8, le boîtier 21 comprend notamment :

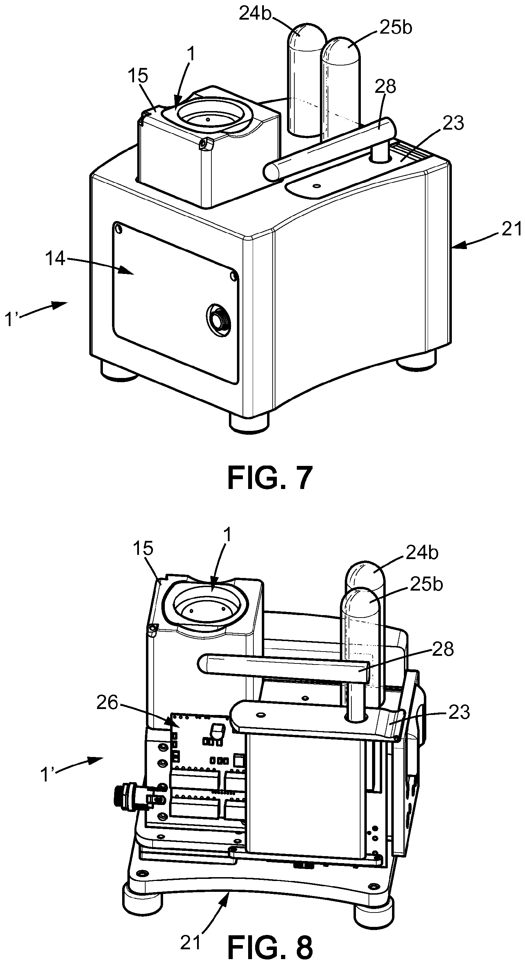

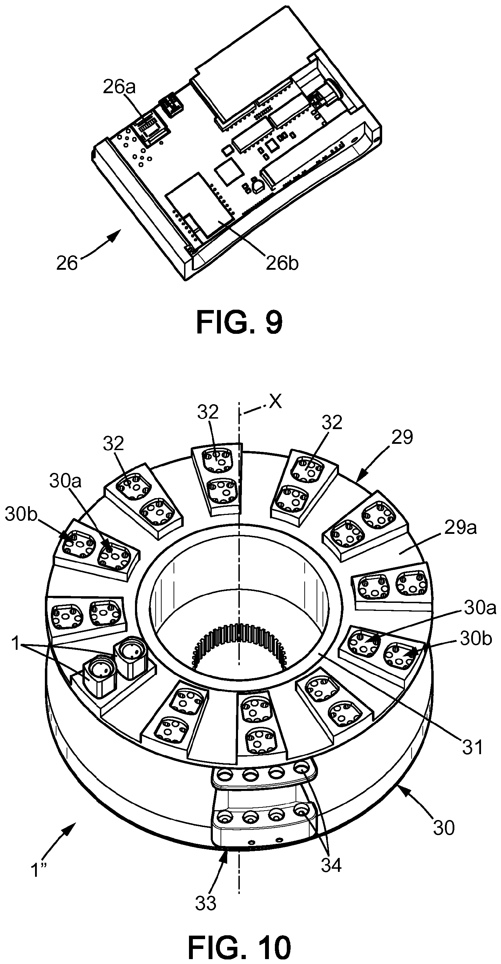

- un logement 22 recevant la coque 15 dans laquelle est logée et connectée une chambre unitaire 1 pour la mise en circulation du milieu de conservation et du gaz tampon et pour la régulation de la température du milieu,
- l'unité de mise en circulation 14 du milieu de conservation et du gaz tampon dans la chambre 1,
- une batterie électrique (identifiée par sa trappe d'accès 23) pour le fonctionnement du dispositif 1' (permettant par exemple une autonomie de 72 heures),
- un logement 24a recevant un premier réservoir tubulaire 24b contenant le milieu de conservation « frais » (i.e. non usé) à introduire dans la chambre 1,
- un logement 25a recevant un second réservoir tubulaire 25b contenant le milieu de conservation usé prélevé de la chambre 1,
- un microcontrôleur 26 à carte mémoire 26a (voir figures 8 et 9) pour la traçabilité de conditions de conservation du tissu en particulier pendant le transport du dispositif 1', comprenant des valeurs mesurées et à réguler du pH, de la température du milieu et optionnellement de paramètres microbiologiques (la carte 26a contenant des données relatives au milieu et optionnellement au tissu et/ou à son donneur),
- un écran 27 par exemple tactile pour l'affichage des conditions de conservation, et
- une antenne 28 par exemple de type GSM ou Wifi, Bluetooth ou Zigbee pour la communication à un opérateur via le microcontrôleur 26 des conditions de conservation et pour que cet opérateur puisse les modifier par exemple en modifiant le débit et/ou la pression du gaz tampon pour régler le pH du milieu (une augmentation du débit de gaz tampon pouvant permettre par « rinçage » de retrouver le pH de consigne), en cas de message d'alerte sur ce pH émis par le dispositif 1'.

La carte mémoire 26a du microcontrôleur 26 détaillée à la figure 9 est par exemple de type mémoire SSD (pour «Solid State Drive », i.e. disque à mémoire flash), et elle peut être couplée à un module 26b de type GSM et Wifi.

Comme expliqué ci-dessus, un opérateur tel qu'un chirurgien qui ouvre la chambre de conservation unitaire 1 sait, grâce à la présence intacte desdits moyens aptes à signaler l'ouverture du couvercle (tels qu'une patte sécable) et grâce à la carte-mémoire 26a du microcontrôleur 26 recensant les conditions de conservation du tissu, qu'il peut procéder le cas échéant à la greffe ou à l'expérience *ex vivo* prévue à partir du tissu ainsi conservé.

Le dispositif 1" selon un autre aspect de l'invention illustré à la figure 10 forme un incubateur multi-tissus permettant une conservation et un contrôle qualité simultanés d'une multitude de tissus. Ce dispositif 1" est à cet effet configuré pour contenir une multitude de chambres unitaires de conservation 1 (seulement deux chambres 1 sont représentées) contenant respectivement les tissus baignant dans leurs milieux de conservation dont les températures et le pH notamment sont régulés individuellement. Dans cet exemple, les chambres 1 sont montées sur un plateau circulaire 29 équipé de moyens d'analyse qui comprennent par exemple un microscope miniaturisé (non illustré) pour le comptage des cellules vivantes dans les tissus et qui sont montés en contrebas du plateau 29 sur un support 30 centré sur l'axe de symétrie X du plateau 29 et mobile en rotation par rapport au plateau 29, via des crans 31 pour positionner ces moyens d'analyse suivant des positions angulaires déterminées par rapport aux chambres 1.

Le plateau 29 présente une surface de réception 29a des chambres 1 en forme de couronne circulaire et présentant une succession de logements 30a et 30b pour les chambres 1 répartis par paires radiales (par rapport à l'axe X) suivant un agencement circulaire. Comme visible à la figure 10, chaque logement 30a, 30b est adapté pour permettre le branchement de la connectique 20 des chambres 1 à travers le plateau 29 via des prises 32 formées dans ces logements 30a et 30b, de sorte à assurer et maintenir les conditions de conservation requises pour les tissus dès leur réception de la banque correspondante (notamment via les circuits de milieu de conservation et de gaz tampon et l'unité de régulation de température 10).

Est en outre visible à l'exemple de la figure 10 un réceptacle 33 qui définit deux paires d'emplacements 34 pour quatre réservoirs 24b et 25b et qui est par exemple solidaire en rotation du support 30. Chaque paire d'emplacements 34 sont respectivement destinés à recevoir un premier et un second réservoirs tubulaires 24b (milieu non usé) et 25b (milieu usé) pour l'une des deux chambres 1 de chaque paire de chambres 1 radiales.

## Revendications

1. Dispositif de conservation (1', 1") d'au moins un tissu humain ou animal, par exemple un prélèvement cornéen, en vue d'une greffe ou d'une expérience *ex vivo,* le dispositif comprenant au moins une chambre (1) qui est adaptée pour recevoir et conserver ledit au moins un tissu dans un milieu de conservation liquide et qui comprend des moyens de renouvellement en continu (4a et 4b, 5a et 5b) dudit milieu dans ladite au moins une chambre, **caractérisé en ce que** le dispositif comprend en outre des moyens de régulation (6a et 6b, 7a et 7b) d'au moins un paramètre physicochimique dudit milieu comprenant son pH, par circulation en continu d'un gaz tampon dans ladite au moins une chambre hors et au contact dudit milieu, lesdits moyens de régulation comprenant :

   - des orifices d'amenée et d'évacuation (6a et 6b) dudit gaz tampon dans et de ladite au moins une chambre, de sorte que ledit gaz tampon soit amené dans et évacué de ladite au moins une chambre au-dessus dudit milieu,
   - des raccords fluidiques (7a et 7b) pour ledit gaz tampon communiquant respectivement avec lesdits orifices d'amenée et d'évacuation (6a et 6b) et aptes à le faire circuler sous pression et en continu dans ladite au moins une chambre (1), via une unité de mise en circulation (14) que comprend le dispositif, et
   - ladite unité de mise en circulation (14).

2. Dispositif (1', 1") selon la revendication 1, dans lequel ladite au moins une chambre (1) comporte :

   - un récipient (2) comportant un fond (2a) prolongé par une paroi latérale périphérique (2b) s'étendant à partir dudit fond, ledit récipient présentant de préférence une face interne (2c) sensiblement hémisphérique, et
   - un couvercle (3) au moins en partie translucide ou transparent monté sur ladite paroi latérale, ledit couvercle étant de préférence conçu pour une ouverture unique et pourvu de moyens (3b) signalant à un opérateur son ouverture antérieure,

   et dans lequel lesdits orifices d'amenée et d'évacuation (6a et 6b) dudit gaz tampon tel que du dioxyde de carbone sont formés dans une zone supérieure de ladite paroi latérale adjacente audit couvercle.

**3.** Dispositif (1', 1") selon la revendication 2, dans lequel lesdits moyens de régulation (6a et 6b, 7a et 7b) comprennent en outre :

- au moins un capteur dudit au moins un paramètre physicochimique communiquant avec l'intérieur de ladite au moins une chambre et comprenant un capteur de pH (8),
- optionnellement un capteur microbiologique par exemple fonctionnalisé apte à détecter une bactérie donnée dans ledit milieu, et
- optionnellement au moins une ouverture dans ladite paroi latérale pour introduire dans ladite au moins une chambre un fluide thérapeutique ou non pour préserver ledit au moins un tissu, et/ou pour accélérer sa régénération tissulaire,

et dans lequel ladite unité de mise en circulation (14) comprend par exemple des pompes.

**4.** Dispositif (1', 1") selon la revendication 3, dans lequel lesdits moyens de renouvellement (4a et 4b, 5a et 5b) dudit milieu comprennent des orifices d'introduction et de prélèvement (4a et 4b) dudit milieu adaptés pour l'introduire dans et le prélever de ladite au moins une chambre (1), respectivement en provenance d'un premier réservoir (24b) du dispositif contenant ledit milieu non usé à introduire et vers un second réservoir (25b) du dispositif contenant ledit milieu usé une fois prélevé, lesdits orifices d'introduction et de prélèvement étant formés dans ledit récipient (2) et communiquant respectivement avec deux raccords fluidiques (5a et 5b) pour ledit milieu aptes à faire circuler sous pression et en continu ledit milieu dans ladite au moins une chambre via ladite unité de mise en circulation (14).

**5.** Dispositif (1', 1") selon une des revendications 2 à 4, dans lequel le dispositif comprend en outre une unité de régulation de la température (10) dudit milieu dans ladite au moins une chambre (1) à au moins une valeur prédéterminée comprise entre -20° C et 50° C, ladite unité de régulation étant montée hors de ladite au moins une chambre contre ledit fond (2a) et comprenant de préférence un module Peltier (11) pourvu de connecteurs (12 et 13) et d'un capteur de température communiquant avec l'intérieur de ladite au moins une chambre.

**6.** Dispositif (1') selon une des revendications 2 à 5, dans lequel le dispositif comporte en outre un boîtier unitaire (21) transportable comprenant :

- un premier logement (22) recevant de manière amovible une coque (15) thermiquement isolante de préférence polymérique dans laquelle est logée une dite chambre (1) dont ledit récipient (2) est de préférence métallique,
- ladite unité de mise en circulation (14) dudit au moins un milieu de conservation et dudit gaz tampon dans ladite chambre comprenant de préférence des pompes,
- un accumulateur d'énergie électrique (23) pour le fonctionnement du dispositif comprenant de préférence une batterie,
- un second logement (24a) recevant de manière amovible un premier réservoir (24b) contenant ledit milieu non usé à introduire dans ladite chambre,
- un troisième logement (25a) recevant de manière amovible un second réservoir (25b) contenant ledit milieu usé une fois prélevé de ladite chambre,
- un microcontrôleur (26) à carte mémoire (26a) qui est apte à permettre la traçabilité de conditions de conservation dudit au moins un tissu en particulier pendant le transport du dispositif, comprenant des valeurs mesurées et à réguler dudit au moins un paramètre physicochimique, de la température dudit milieu et optionnellement de paramètres microbiologiques, ladite carte contenant des données relatives audit milieu et optionnellement audit au moins un tissu et/ou à son donneur,
- des moyens d'affichage (27) desdites conditions de conservation, comprenant de préférence un écran tactile, et
- des moyens de communication (28) avec un opérateur comprenant par exemple une antenne, lesdits moyens de communication étant couplés audit microcontrôleur et aptes à permettre audit opérateur d'accéder auxdites conditions de conservation et de les modifier par exemple en modifiant le débit et/ou la pression dudit gaz tampon pour régler le pH dudit milieu.

**7.** Dispositif (1") selon les revendications 4 et 5, dans lequel le dispositif est adapté pour la conservation et un contrôle qualité simultanés de plusieurs dits tissus, le dispositif comprenant :

- un plateau (29) configuré pour recevoir suivant un agencement circulaire ou linéaire une pluralité de dites chambres (1) respectivement adaptées pour contenir lesdits tissus baignant dans des dits milieux de conservation identiques ou différents dont les températures et des dits paramètres physicochimiques sont régulés individuellement,

- un réceptacle (33) pour au moins un dit premier réservoir (24b) et un dit second réservoir (25b) couplés à chacune desdites chambres, et
- des moyens d'analyse qui comprennent par exemple un microscope pour le comptage de cellules vivantes dans lesdits tissus et qui sont montés en mouvement relatif par rapport audit plateau.

**8.** Dispositif (1") selon la revendication 7, dans lequel ledit plateau (29) présente une surface de réception (29a) desdites chambres (1) qui est en forme de couronne circulaire présentant un axe de symétrie (X) et qui présente une succession de logements (30a et 30b) pour lesdites chambres, lesdits logements étant répartis suivant ledit agencement circulaire et étant adaptés pour réaliser le branchement desdits raccords fluidiques pour ledit gaz tampon (7a et 7b) et pour ledit milieu (5a et 5b), dudit capteur de pH (8) et dudit capteur de température, et dans lequel lesdits moyens d'analyse sont montés en rotation sur un support mobile (30) centré sur ledit axe de symétrie, monté en contrebas dudit plateau et par exemple pourvu de crans (31) pour positionner lesdits moyens d'analyse suivant des positions angulaires déterminées par rapport auxdites chambres, lesquelles sont par exemple disposées suivant une dite succession de paires radiales de dits logements.

**9.** Procédé de conservation d'au moins un tissu humain ou animal, par exemple un prélèvement cornéen, en vue d'une greffe ou d'une expérience *ex vivo,* le procédé comprenant la mise en place dudit au moins un tissu dans un bain liquide d'un milieu de conservation à l'intérieur d'au moins une chambre (1) dans laquelle ledit milieu est renouvelé en continu, **caractérisé en ce que** le procédé comprend une circulation en continu d'un gaz tampon, tel que du dioxyde de carbone, dans ladite au moins une chambre hors et au contact dudit milieu de sorte que ledit gaz tampon soit amené dans et évacué de ladite au moins une chambre au-dessus du milieu, par des orifices d'amenée et d'évacuation (6a et 6b) du gaz tampon dans et de ladite au moins une chambre et par des raccords fluidiques (7a et 7b) pour le gaz tampon communiquant respectivement avec lesdits orifices d'amenée et d'évacuation pour faire circuler le gaz tampon sous pression et en continu dans ladite au moins une chambre, pour réguler :

- au moins un paramètre physicochimique dudit milieu comprenant son pH, et
- de préférence la température dudit milieu à au moins une valeur prédéterminée comprise entre -20°C et 50°C.

**10.** Procédé selon la revendication 9, dans lequel on fait circuler ledit gaz tampon selon un débit et une pression partielle réglables, avec de préférence pour la conservation d'une dite cornée une fraction molaire de dioxyde de carbone à titre de gaz tampon comprise entre 2 % et 10 % et par exemple entre 4 % et 6 %.

**Patentansprüche**

**1.** Vorrichtung zur Konservierung (1', 1") von wenigstens einem menschlichen oder tierischen Gewebe, beispielsweise einer Hornhautentnahme, für eine Transplantation oder ein Ex-vivo-Experiment, wobei die Vorrichtung wenigstens eine Kammer (1) umfasst, welche dazu ausgebildet ist, das wenigstens eine Gewebe in einem flüssigen Konservierungsmedium aufzunehmen und zu konservieren, und welche Mittel zur kontinuierlichen Erneuerung (4a und 4b, 5a und 5b) des Mediums in der wenigstens einen Kammer umfasst, **dadurch gekennzeichnet, dass** die Vorrichtung ferner Mittel zur Einstellung (6a und 6b, 7a und 7b) wenigstens eines physikalisch-chemischen Parameters des Mediums, einschließlich seines pH-Werts, durch kontinuierliche Zirkulation eines Puffergases in der wenigstens einen Kammer außerhalb und in Kontakt mit dem Medium umfasst, wobei die Einstellmittel umfassen:

- Einlass- und Auslassöffnungen (6a und 6b) für das Puffergas in die und aus der wenigstens einen Kammer, so dass das Puffergas in die und aus der wenigstens einen Kammer oberhalb des Mediums eingelassen und ausgelassen wird,
- Fluidanschlüsse (7a und 7b) für das Puffergas, welche jeweils mit den Einlass- und Auslassöffnungen (6a und 6b) in Verbindung stehen und dazu geeignet sind, es unter Druck und kontinuierlich in der wenigstens einen Kammer (1) über eine Zirkulationseinheit (14), die in der Vorrichtung enthalten ist, zirkulieren zu lassen, und
- die Zirkulationseinheit (14).

**2.** Vorrichtung (1', 1") nach Anspruch 1, wobei die wenigstens eine Kammer (1) umfasst:

- einen Behälter (2) mit einem Boden (2a), der durch eine Umfangs-Seitenwand (2b) verlängert ist, die sich von dem Boden aus erstreckt, wobei der Behälter bevorzugt eine im Wesentlichen halbkugelförmige Innenseite (2c) aufweist, und

- einen wenigstens teilweise lichtdurchlässigen oder transparenten Deckel (3), der an der Seitenwand angebracht ist, wobei der Deckel bevorzugt für eine einzige Öffnung vorgesehen ist und mit Mitteln (3b) versehen ist, die einem Bediener seine vorherige Öffnung signalisieren,

und wobei die Einlass- und Auslassöffnungen (6a und 6b) des Puffergases, wie beispielsweise Kohlendioxid, in einem oberen Bereich der dem Deckel benachbarten Seitenwand ausgebildet sind.

3. Vorrichtung (1', 1") nach Anspruch 2, wobei die Einstellmittel (6a und 6b, 7a und 7b) ferner umfassen:

- wenigstens einen Sensor des wenigstens einen physikalisch-chemischen Parameters, der mit dem Inneren der wenigstens einen Kammer in Verbindung steht und einen pH-Sensor (8) umfasst,
- optional einen mikrobiologischen Sensor, z. B. einen funktionalisierten Sensor, der dazu geeignet ist, ein bestimmtes Bakterium in dem Medium nachzuweisen, und
- optional wenigstens eine Öffnung in der Seitenwand, um in die wenigstens eine Kammer ein therapeutisches oder nichttherapeutisches Fluid einzubringen, um das wenigstens eine Gewebe zu konservieren und/oder seine Geweberegeneration zu beschleunigen,

und wobei die Zirkulationseinheit (14) beispielsweise Pumpen umfasst.

4. Vorrichtung (1', 1") nach Anspruch 3, wobei die Mittel zur Erneuerung (4a und 4b, 5a und 5b) des Mediums Öffnungen zur Einführung und Entnahme (4a und 4b) des Mediums umfassen, die dazu ausgebildet sind, es in die wenigstens eine Kammer (1) einzuführen und aus dieser zu entnehmen, jeweils aus einem ersten Tank (24b) der Vorrichtung, der das einzuführende ungenutzte Medium enthält, und zu einem zweiten Tank (25b) der Vorrichtung, der das entnommene genutzte Medium enthält, wobei die Einführungs- und Entnahmeöffnungen in dem Behälter (2) ausgebildet sind und jeweils mit zwei Fluidanschlüssen (5a und 5b) für das Medium in Verbindung stehen, die dazu geeignet sind, das Medium unter Druck und kontinuierlich in der wenigstens einen Kammer über die Zirkulationseinheit (14) zirkulieren zu lassen.

5. Vorrichtung (1', 1") nach einem der Ansprüche 2 bis 4, wobei die Vorrichtung ferner eine Einheit zur Einstellung der Temperatur (10) des Mediums in der wenigstens einen Kammer (1) auf wenigstens einen vorbestimmten Wert zwischen -20° C und 50° C umfasst, wobei die Einstelleinheit außerhalb der wenigstens einen Kammer am Boden (2a) montiert ist und bevorzugt ein Peltier-Modul (11) mit Anschlüssen (12 und 13) und einem Temperatursensor umfasst, der mit dem Inneren der wenigstens einen Kammer in Verbindung steht.

6. Vorrichtung (1') nach einem der Ansprüche 2 bis 5, wobei die Vorrichtung ferner ein transportables einstückiges Gehäuse (21) aufweist, das Folgendes umfasst:

- eine erste Aufnahme (22), die auf entfernbare Weise eine wärmeisolierende, bevorzugt polymere Schale (15) aufnimmt, in der eine sogenannte Kammer (1) aufgenommen ist, deren Behälter (2) bevorzugt metallisch ist,
- die besagte Zirkulationseinheit (14) des wenigstens einen Konservierungsmediums und des Puffergases in der Kammer, welche bevorzugt Pumpen umfasst,
- einen elektrischen Energiespeicher (23) für den Betrieb der Vorrichtung, der bevorzugt eine Batterie umfasst,
- eine zweite Aufnahme (24a), die auf entfernbare Weise einen ersten Tank (24b) aufnimmt, der das ungenutzte Medium enthält, das in der Kammer zugeführt werden soll,
- eine dritte Aufnahme (25a), die auf entfernbare Weise einen zweiten Tank (25b) aufnimmt, der das genutzte Medium nach der Entnahme aus der Kammer enthält,
- einen Mikrocontroller (26) mit einer Speicherkarte (26a), dazu geeignet, die Nachverfolgung der Aufbewahrungsbedingungen des wenigstens einen Gewebes insbesondere während des Transports der Vorrichtung zu ermöglichen, einschließlich gemessener und einzustellender Werte des wenigstens einen physikalisch-chemischen Parameters, der Temperatur des Mediums und optional mikrobiologischer Parameter, wobei die Karte Daten umfasst, die sich auf das Medium und optional auf das wenigstens eine Gewebe und/oder seinen Spender beziehen,
- Mittel zur Anzeige (27) der genannten Konservierungsbedingungen, die bevorzugt einen Touchscreen umfassen, und
- Mittel zur Kommunikation (28) mit einem Bediener, die beispielsweise eine Antenne umfassen, wobei die Kommunikationsmittel mit dem Mikrocontroller gekoppelt und dazu geeignet sind, dem Bediener den Zugang zu den Konservierungsbedingungen zu ermöglichen und diese zu ändern, beispielsweise durch Änderung des Durchflusses und/oder des Drucks des Puffergases, um den pH-Wert des Mediums einzustellen.

**7.** Vorrichtung (1") nach den Ansprüchen 4 und 5, wobei die Vorrichtung zur gleichzeitigen Aufbewahrung und Qualitätskontrolle mehrerer dieser Gewebe geeignet ist, wobei die Vorrichtung umfasst:

- eine Platte (29), die dazu konfiguriert ist, in einer kreisförmigen oder linearen Anordnung eine Vielzahl von Kammern (1) aufzunehmen, die jeweils dazu ausgebildet sind, die Gewebe zu enthalten, die in identischen oder unterschiedlichen Konservierungsmedien schwimmen, deren Temperaturen und physikalisch-chemischen Parameter individuell eingestellt sind,
- einen Behälter (33) für wenigstens einen ersten Tank (24b) und einen zweiten Tank (25b), die mit jeder der Kammern verbunden sind, und
- Analysemittel, die z. B. ein Mikroskop zum Zählen von lebenden Zellen in den Geweben umfassen und die in Relativbewegung zu der Platte montiert sind.

**8.** Vorrichtung (1") nach Anspruch 7, wobei die Platte (29) eine Aufnahmefläche (29a) für die Kammern (1) aufweist, die die Form eines kreisförmigen Kranzes mit einer Symmetrieachse (X) hat und eine Folge von Aufnahmen (30a und 30b) für die Kammern aufweist, wobei die Kammern in der kreisförmigen Anordnung verteilt sind und sich für den Anschluss der Fluidanschlüsse für das Puffergas (7a und 7b) und für das Medium (5a und 5b), des pH-Sensors (8) und des Temperatursensors eignen,
und wobei die Analysemittel drehbar auf einem beweglichen Träger (30) montiert sind, der auf der Symmetrieachse zentriert ist, unterhalb der Platte montiert ist und beispielsweise mit Rasten (31) versehen ist, um die Analysemittel in bestimmten Winkelpositionen in Bezug auf die Kammern zu positionieren, die beispielsweise in einer Folge von radialen Paaren der Aufnahmen angeordnet sind.

**9.** Verfahren zur Konservierung von wenigstens einem menschlichen oder tierischen Gewebe, beispielsweise einer Hornhautentnahme, für eine Transplantation oder ein Ex-vivo-Experiment, wobei das Verfahren die Anordnung des wenigstens einen Gewebes in einem Flüssigkeitsbad eines Konservierungsmediums innerhalb wenigstens einer Kammer (1) umfasst, in der das Medium kontinuierlich erneuert wird, **dadurch gekennzeichnet, dass** das Verfahren eine kontinuierliche Zirkulation eines Puffergases, wie beispielsweise Kohlendioxid, in der wenigstens einen Kammer außerhalb und in Kontakt mit dem Medium umfasst, so dass das Puffergas oberhalb des Mediums in die und aus der wenigstens einen Kammer durch Einlass-und Auslassöffnungen (6a und 6b) für das Puffergas in die und aus der wenigstens einen Kammer und durch Fluidanschlüsse (7a und 7b) für das Puffergas, die jeweils mit den Einlass- und Auslassöffnungen in Verbindung stehen, ein- und ausgelassen wird, um das Puffergas unter Druck und kontinuierlich in der wenigstens einen Kammer zirkulieren zu lassen, um Folgendes einzustellen:

- wenigstens einen physikalisch-chemischen Parameter des Mediums, einschließlich seines pH-Werts, und
- bevorzugt die Temperatur des Mediums auf wenigstens einen vorbestimmten Wert zwischen -20 °C und 50 °C.

**10.** Verfahren nach Anspruch 9, wobei man das Puffergas mit einer einstellbaren Menge und einem einstellbaren Partialdruck zirkulieren lässt, wobei bevorzugt zur Konservierung einer Hornhaut als Puffergas ein Kohlendioxid-Molanteil zwischen 2 % und 10 % und beispielsweise zwischen 4 % und 6 % verwendet wird.

**Claims**

**1.** A device for preserving (1', 1") at least one human or animal tissue, for example a corneal sample, for a graft or *ex vivo* experiment, the device comprising at least one chamber (1) which is adapted to receive and preserve said at least one tissue in a liquid preservation medium and which comprises means for continuously renewing (4a and 4b, 5a and 5b) said medium in said at least one chamber, **characterised in that** the device further comprises means for regulating (6a and 6b, 7a and 7b) at least one physicochemical parameter of said medium comprising its pH, by continuously circulating a buffer gas in said at least one chamber out of and in contact with said medium, said regulation means comprising:

- ports for feeding and discharging (6a and 6b) said buffer gas into and from said at least one chamber, so that said buffer gas is fed into and discharged from said at least one chamber above said medium,
- fluid couplings (7a and 7b) for said buffer gas communicating with said feed and discharge ports (6a and 6b) respectively and capable of circulating the same under pressure and continuously into said at least one chamber (1), via a circulation unit (14) which the device comprises, and
- said circulation unit (14).

**2.** The device (1', 1") according to claim 1, wherein said at least one chamber (1) includes:

- a container (2) including a bottom (2a) extending to a peripheral side wall (2b) extending from said bottom, said container preferably having a substantially hemispherical inner face (2c), and
- an at least partially translucent or transparent cover (3) mounted to said side wall, said cover being preferably designed for a single opening and provided with means (3b) notifying an operator of its prior opening,

and wherein said ports for feeding and discharging (6a and 6b) said buffer gas such as carbon dioxide are formed in an upper zone of said side wall adjacent to said cover.

**3.** The device (1', 1") according to claim 2, wherein said regulation means (6a and 6b, 7a and 7b) further comprise:

- at least one sensor for said at least one physicochemical parameter communicating with inside of said at least one chamber and comprising a pH sensor (8),
- optionally a microbiological sensor, for example functionalised to be capable of detecting a given bacterium in said medium, and
- optionally at least one opening in said side wall to introduce into said at least one chamber a therapeutic or non-therapeutic fluid to protect said at least one tissue, and/or to accelerate its tissue regeneration,

and wherein said circulation unit (14) comprises pumps for example.

**4.** The device (1', 1") according to claim 3, wherein said means for renewing (4a and 4b, 5a and 5b) said medium comprise ports for introducing and sampling (4a and 4b) said medium adapted to introduce the same into and sample the same from said at least one chamber (1), respectively from a first tank (24b) of the device containing said non-spent medium to be introduced and to a second tank (25b) of the device containing said spent medium once sampled, said introduction and sampling ports being formed in said container (2) and respectively communicating with two fluid couplings (5a and 5b) for said medium capable of circulating said medium under pressure and continuously into said at least one chamber via said circulation unit (14).

**5.** The device (1', 1") according to one of claims 2 to 4, wherein the device further comprises a unit for regulating the temperature (10) of said medium in said at least one chamber (1) to at least one predetermined value of between -20 °C and 50 °C, said regulation unit being mounted out of said at least one chamber against said bottom (2a) and preferably comprising a Peltier module (11) provided with connectors (12 and 13) and with a temperature sensor communicating with inside of said at least one chamber.

**6.** The device (1') according to one of claims 2 to 5, wherein the device further includes a transportable unitary casing (21) comprising:

- a first housing (22) removably receiving a preferably polymeric thermally insulating shell (15) in which one said chamber (1) is housed said container (2) of which is preferably of metal,
- said unit for circulating (14) said at least one preservation medium and said buffer gas in said chamber preferably comprising pumps,
- an electric energy storage (23) for operating the device preferably comprising a battery,
- a second housing (24a) removably receiving a first tank (24b) containing said non-spent medium to be introduced into said chamber,
- a third housing (25a) removably receiving a second tank (25b) containing said spent medium once sampled from said chamber,
- a microcontroller (26) with a memory card (26a) which is capable of enabling traceability of preservation conditions of said at least one tissue in particular upon transporting the device, comprising values measured and to be regulated of said at least one physicochemical parameter, of the temperature of said medium and optionally of microbiological parameters, said card containing data relating to said medium and optionally to said at least one tissue and/or to the donor thereof,
- means for displaying (27) said preservation conditions, preferably comprising a touch screen, and
- means for communicating (28) with an operator comprising for example an antenna, said communication means being coupled to said microcontroller and capable of enabling said operator to access said preservation conditions and to modify the same for example by modifying the flow rate and/or the pressure of said buffer gas to adjust pH of said medium.

7. The device (1") according to claims 4 and 5, wherein the device is adapted for the simultaneous preservation and quality control of several said tissues, the device comprising:

- a tray (29) configured to receive in a circular or linear arrangement a plurality of said chambers (1) respectively adapted to contain said tissues immersed in said identical or different preservation media the temperatures and said physicochemical parameters of which are individually regulated,
- a receptacle (33) for at least one said first tank (24b) and one said second tank (25b) coupled to each of said chambers, and
- analysis means which comprise for example a microscope for counting living cells in said tissues and which are relatively movably mounted with respect to said tray.

8. The device (1") according to claim 7, wherein said tray (29) has a surface for receiving (29a) said chambers (1) which is of a circular crown shape having an axis of symmetry (X) and which has a sufficient of housings (30a and 30b) for said chambers, said housings being distributed as said circular arrangement and being adapted to perform connection of said fluid couplings for said buffer gas (7a and 7b) and for said medium (5a and 5b), of said pH sensor (8) and of said temperature sensor,
and wherein said analysis means are rotatably mounted to a movable support (30) centred on said axis of symmetry, mounted underneath said tray and for example provided with notches (31) to position said analysis means at angular positions determined with respect to said chambers, which are for example disposed in one said succession of radial pairs of said housings.

9. A method for preserving at least one human or animal tissue, for example a corneal sample, for a graft or *ex vivo* experiment, the method comprising placing said at least one tissue into a liquid bath of a preservation medium inside at least one chamber (1) in which said medium is continuously renewed, **characterised in that** the method comprises continuously circulating a buffer gas, such as carbon dioxide, into said at least one chamber out of and in contact with said medium so that said buffer gas is fed into and discharged from said at least one chamber above the medium, through ports for feeding and discharging (6a and 6b) the buffer gas into and from said at least one chamber and through fluid couplings (7a and 7b) for the buffer gas respectively communicating with said feed and discharge ports to circulate the buffer gas under pressure and continuously into said at least one chamber, to regulate:

- at least one physicochemical parameter of said medium comprising its pH, and
- preferably the temperature of said medium to at least one predetermined value of between -20 °C and 50 °C.

10. The method according to claim 9, wherein said buffer gas is circulated at adjustable flow rate and partial pressure, with preferably for the preservation of one said cornea a mole fraction of carbon dioxide as a buffer gas of between 2% and 10% and for example between 4% and 6%.

FIG. 1

FIG. 2

**FIG. 3**

**FIG. 4**

FIG. 5

FIG. 6

**FIG. 7**

**FIG. 8**

**FIG. 9**

**FIG. 10**

**EP 3 565 408 B1**

## RÉFÉRENCES CITÉES DANS LA DESCRIPTION

### Documents brevets cités dans la description

- WO 2014140434 A1
- WO 2014188365 A1